(19) Europäisches Patentamt

European Patent Office

Office européen des brevets

(11) **EP 1 449 734 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
***B60T 13/68*** *(2006.01)*

(21) Anmeldenummer: **04001299.9**

(22) Anmeldetag: **22.01.2004**

(54) **Verfahren zur Sollwert-Generierung für eine Rollsperre in einem Fahrzeug**

Method for generating a setpoint for a hill holder for a vehicle

Méthode à générer un valeur de consigne pour une système anti-recul d'un véhicule

(84) Benannte Vertragsstaaten:
**DE IT NL SE**

(30) Priorität: **22.02.2003 DE 10307584**

(43) Veröffentlichungstag der Anmeldung:
**25.08.2004 Patentblatt 2004/35**

(73) Patentinhaber: **WABCO GmbH & CO. OHG**
**30432 Hannover (DE)**

(72) Erfinder:
• **Henken, Immanuel**
**31867 Lauenau (DE)**
• **Schlottmann, Marcel**
**30453 Hannover (DE)**
• **Struwe, Otmar**
**30163 Hannover (DE)**
• **Wolff, Hans-Klaus**
**31832 Springe (DE)**

(74) Vertreter: **Schrödter, Manfred**
**WABCO GmbH & Co. OHG,**
**Postfach 91 12 62**
**30432 Hannover (DE)**

(56) Entgegenhaltungen:
EP-A- 0 370 678    WO-A-99/48738
DE-A- 19 625 989

**Beschreibung**

Die Erfindung bezieht sich auf ein Verfahren zur Sollwert-Generierung für eine Rollsperre in einem Fahrzeug gemäß dem Oberbegriff des Patentanspruchs 1.

Rollsperren dienen dazu, das Fahrzeug durch seine Betriebs-Bremsanlage im Stillstand auch ohne Fahrer-Betätigung des Bremspedals durch automatisches Einsteuern eines Rollsperrendruckes in die Radbremsen auf einer Fahrbahn, die beispielsweise auch geneigt sein kann, zu halten. Derartige Rollsperren werden auch als Halte- oder Parkbremse bezeichnet.

Solche Rollsperren sind hauptsächlich in Fahrzeugen (insbesondere Nutzfahrzeugen) eingesetzt, die mit einer fremdkraftgespeisten Bremsanlage und mit einer elektronischen Bremssteuerung (EBS) ausgerüstet sind. Als Fremdkraft kommen dabei Druckluft, Hydraulik, oder aber elektrische Energie (aus Batterien) in Betracht. Bei einer EBS erfolgt die Signalübertragung vom Bremspedal zur Bremse nicht mechanisch, sondern elektronisch. Das Bremspedal enthält Sensoren, die z.B. den Weg der Trittplatte abfühlen und als elektrisches Signal ausgeben. Dieses Signal wird an ein geeignetes Steuergerät (EBS-Elektronik) weitergeleitet. Dieses steuert gemäß der Bremsanforderung des Fahrers durch Ansteuerung von vorgeschalteten Magnetventilen bei pneumatischen oder hydraulischen Bremsen, oder durch Ansteuerung von elektromechanischen Betätigungsgliedern, z.B. Stellmotoren, die eigentlichen Bremsen an. Die Bremsdrücke werden dabei eingeregelt, d.h. zum Beispiel mit Drucksensoren gemessen und bei Abweichung des Ist-Druckes vom Soll-Druck entsprechend korrigiert. Hierdurch kann ein komfortables, PKW- ähnliches Bremsverhalten erzielt werden.

Eine Halte- bzw. Park-Bremse in einem Fahrzeug mit einem elektronischen Bremssystem (EBS) ist z. B. aus der WO 99/48738 bekannt. Bei der bekannten Park-Bremse wird beansprucht, daß die Bremsung zusätzlich durch mechanische Mittel verriegelbar ist, so daß auch bei Abfall der Hilfskraft, beispielsweise Druckabfall der Druckluft, die Bremswirkung erhalten bleibt. Weiter zeigt die bekannte Schrift, daß die EBS an einen CAN-Datenbus angeschlossen ist, wodurch der EBS-Elektronik weitere Fahrzeugdaten von anderen Elektroniken oder besonderen Sensoren im Fahrzeug, wie beispielsweise Bremsdrücke, Radgeschwindigkeiten, Motordaten, Reifendrücke, Fahrzeuggewicht, Straßenbeschaffenheit (Reibwerte), Sraßenneigung usw. zur Verfügung stehen können.

Diese Daten können wie erwähnt entweder durch besondere Sensoren gemessen werden, oder aber, was kostengünstiger ist, aus anderen Fahrzeugdaten berechnet werden. So kann z.B. das Fahrzeuggewicht aus der Fahrzeugbeschleunigung gemäß der DE 3246201 A1 und die Straßenneigung gemäß der DE 3334719 A1 bestimmt werden.

Weiter ist aus der EP 0 822 129 B1 ein Verfahren zum Anfahren eines Fahrzeugs bekannt, bei dem der erforderliche Bremsdruck zum Halten des Fahrzeugs ebenfalls mittels Fremdkraft oder Fremdkraftmitteln aufgebaut wird. Als Haltedruck bzw. Referenzwert des Bremsdruckes im Haltezeitpunkt wird bei dem bekannten Verfahren der Bremsdruck eingesteuert bzw. gehalten, der zu diesem Zeitpunkt durch den Fahrer gerade vorgegeben worden ist.

Dieses Verfahren hat den Nachteil, daß insbesondere bei einem Halt auf ansteigender Straße der vom Fahrer eingesteuerte Bremsdruck unter Umständen nicht ausreichend sein kann, um das Fahrzeug anschließend sicher zu halten. Der Grund hierfür ist, das bei einem Bremsvorgang auf ansteigender Straße weniger gebremst werden muß, um das Fahrzeug zum Stehen zu bringen. Sollte das Fahrzeug daraufhin zurückrollen, muß der Fahrer die Bremse nachtreten.

Entsprechend kann bei einer Bremsung im Gefälle der Haltedruck zu hoch ausfallen, wodurch sich eine unnötige Belastung der Bremsanlage und ein zu hoher Luftverbrauch ergibt. Aus der genannten Schrift ist weiter bekannt, daß zur Ermittlung des Referenzwertes für den Haltedruck auch der Neigungswinkel des Fahrzeugs bzw. die Straßensteigung berücksichtigt wird, und daß weitere fahrzeugspezifische Parameter berücksichtigt werden können.

Schließlich ist aus der DE 196 25 989 A1 ein Verfahren zum Betreiben einer Bremsanlage, insbesondere einer fremdkraftgespeisten Bremsanlage von Nutzfahrzeugen, bekannt, bei dem ebenfalls nach dem Stillstand des Fahrzeuges ein Bremsdruck unabhängig von der Fahrer-Betätigung des Bremspedales aufrechterhalten wird. Aufgabe ist hier, den Druckmittelverbrauch zu verringern. Hierzu können einzelnen Fahrzeugachsen unterschiedliche Haltedrücke zugeführt werden, wobei z.B. für weniger belastete Achsen geringere Bremsdrücke ausreichen. Dabei wird grundsätzlich der zum Halten des Fahrzeugs einzusteuernde Bremsdruck anhand eines Maßes für die Fahrer-Bremsbetätigung während des zum Stillstand führenden Bremsvorganges ermittelt. Insbesondere ist der bekannte Haltedruck etwa proportional dem zum Stillstand des Fahrzeugs führenden Bremsdruck.

Dieses Verfahren hat ebenfalls den Nachteil, daß der damit ermittelte Haltedruck bei einer Bremsung in einer Steigung zu gering und in einem Gefälle zu hoch ausfallen kann. Außerdem werden die Verzögerungs-Anteile einer etwa eingelegten Dauerbremse (Retarder) nicht berücksichtigt. Heutige, im Getriebe integrierte Retarder bringen leicht Abbremsungen von über 0,3g. Hierdurch werden bei dem bekannten Verfahren tendenziell zu niedrige Rollsperrendrücke ausgesteuert.

Die zusätzliche Abbremsung durch einen ständig eingelegten Retarder wirkt sich bei dem bekannten Verfahren insbesondere bei einem Halt in einer Steigung verfälschend auf den ermittelten Haltedruck aus in dem Sinne, daß der Haltedruck dann erheblich zu gering berechnet wird.

Der Erfindung liegt die Aufgabe zugrunde, den Haltedruck für eine Rollsperre so zu berechnen und im richtigen Moment in die Bremsen einzuleiten, daß stets ein für das sichere Halten des Fahrzeugs genügend hoher, aber andererseits nicht zu hoher Haltedruck berechnet und eingesteuert wird.

Hierdurch soll die Rollsperre für den Fahrer komfortabel und zuverlässig bedienbar sein, ohne daß das Bremspedal nachgetreten werden muß und ohne zu einem unnötig hohen Druckmittelverbrauch der fremdkraftgespeisten Bremsanlage zu führen. Insbesondere soll eine etwa eingelegte Dauerbremse nicht zu einem zu geringen Haltedruck bei einem Halt in einer Steigung führen. Dies ist deshalb von besonderer Bedeutung, da in diesem Fall die Rollsperre dem Fahrer als Anfahrhilfe beim schwierigen Anfahrvorgang in der Steigung dient.

Die obengenannte Aufgabe wird durch die im Patentanspruch 1 enthaltene Erfindung gelöst.

Die Unteransprüche enthalten zweckmäßige Weiterbildungen der Erfindung. Insbesondere sind konkrete Formeln zur Berechnung des Haltedruckes durch die EBS-Elektronik angegeben.

Gemäß dem Kennzeichen des Hauptanspruchs ist erfindungsgemäß der von der EBS-Elektronik berechnete und anschließend in die Radbremsen ausgesteuerte Rollsperrendruck eine Funktion der temporären Fahrzeugverzögerung vor einem Halt des Fahrzeugs. Diese wird bei betätigter Betriebs- oder Dauerbremse gemessen bzw. erfaßt. Gegenüber dem Stand der Technik hat die Erfindung den Vorteil, daß auch der Verzögerungsanteil einer eingelegten Dauerbremse berücksichtigt wird. Insbesondere in einer Steigung wird dadurch das Fahrzeug sicher gehalten.

Die obengenannte Fahrzeugverzögerung kann insbesondere durch Differenzierung der Radsensorsignale bestimmt werden. Die dazu nötigen Rad-Drehzahlsensoren werden für das in dem EBS normalerweise integrierte Blokkierschutzsystem (ABS) verwendet und sind somit bereits vorhanden. Hierdurch wird ein besonderer Verzögerungssensor eingespart.

Zweckmäßig wird als temporäre Fahrzeugverzögerung ein Wert berechnet, der proportional der maximalen Fahrzeugverzögerung vor dem Halt des Fahrzeugs ist.

Alternativ kann als temporäre Fahrzeugverzögerung auch ein Wert berechnet werden, der proportional der mittleren Fahrzeugverzögerung vor dem Halt des Fahrzeugs ist.

Dabei wird zweckmäßigerweise die temporäre Fahrzeugverzögerung nur oberhalb einer Fahrzeuggeschwindigkeits-schwelle ausgewertet, die etwa bei 20 km/h liegt.

Solange das Fahrzeug also schneller als 20 km/h fährt, werden die temporären Fahrzeugverzögerungen erfaßt und in einen temporären Speicher der EBS eingelesen. Dabei werden die gespeicherten Verzögerungswerte nur durch jeweils höhere Werte ersetzt, aber nicht verringert. Hierdurch wird erreicht, daß der mit Hilfe dieser gespeicherten Verzögerungswerte errechnete Rollsperrendruck ausreichend hoch wird.

Mit dem Lösen der Betriebs- oder Dauerbremse beim Wiederanfahren wird der temporäre Speicher wieder gelöscht.

Sollte die so berechnete bzw. bestimmte temporäre Fahrzeugverzögerung vor dem Halt des Fahrzeugs in Einzelfällen besonders niedrig ausfallen bzw. unterhalb eines festgelegten Schwellwertes bleiben, so wird dieser Schwellwert als temporäre Fahrzeugverzögerung geladen und unverändert gespeichert. Ein derartiger Schwellwert für eine minimale temporäre Fahrzeugverzögerung kann bei etwa 1,8 m/s² liegen. Hiermit ergibt sich ein minimaler Haltedruck, der je nach Fahrzeugtyp (abhängig von p max) differieren kann, von etwa 1,5 bis 2 bar. Dieser Wert ist abhängig von pmax, dem maximal erreichbarem Bremsdruck des Fahrzeugs. Mit dieser Haltekraft wird das Fahrzeug also in jedem Falle gehalten.

Falls sich daraufhin nach einem Bremsvorgang in einer Steigung oder in einem Gefälle herausstellen sollte, daß das Fahrzeug durch diesen Mindestdruck nicht sicher gehalten wird, bleibt dem Fahrer jederzeit die Möglichkeit, durch Nachtreten des Bremspedals den Haltedruck weiter zu erhöhen. In diesem Fall wird also der dann durch den Fahrer nachträglich eingesteuerte Bremsdruck gehalten bzw. eingesperrt. Entsprechendes gilt auch für die Bremskraft bei elektrisch betätigten Bremsen.

Der Rollensperrendruck kann zweckmäßig berechnet werden nach der Formel

```
Solldruck_RSP =  k1 x Ist_Verz_Temp x pmax.
```

Mit

Solldruck_RSP = Rollsperrendruck

k1 = Faktor zur Umrechnung der Verzögerung in einen prozentualen Anteil,

Ist_Verz_Temp = gespeicherter Istwert (Maximalwert) der temporären Fahrzeugverzögerung,

pmax = maximal erreichbarer Bremsdruck des Fahrzeugs.

Der Rollsperrensolldruck bzw. Haltedruck ist in diesem Falle also proportional der maximalen Istverzögerung des Fahrzeugs vor dem Halt.

Alternativ kann auch die mittlere Istverzögerung eingesetzt werden. Eine Mittelwert-Bildung kann nach bekannten Verfahren erfolgen.

Alternativ kann der optimale Rollsperrendruck auch noch genauer berechnet werden nach der Formel

$$\texttt{Solldruck\_RSP = k1 x Ist\_Verz\_Temp x pmax x k2}$$

mit

k2 = Faktor zur Berücksichtigung des aktuellen Beladungszustands aus einer externen Masseberechnung des Fahrzeugs

Im Gegensatz zur vorgenannten Formel wird also hier durch das zusätzliche Glied k2 der Beladungszustand des jeweils benutzten Fahrzeugs berücksichtigt. Hierdurch wird für den unbeladenen Zustand ein deutlich geringerer Solldruck generiert als für den beladenen Zustand (Verhältnis bis 1 : 3).

Alternativ kann wiederum auch die mittlere Istverzögerung eingesetzt werden.

Zweckmäßig können für die Einzelachsen des Fahrzeugs auch unterschiedliche Haltedrücke berechnet und eingesteuert werden. Dies erfolgt in Abhängigkeit von den Lastanteilen der Einzelachsen. Diese werden zweckmäßig bei höheren Lastanteilen auch mit höheren Haltedrücken versorgt. Derartige unterschiedliche Haltedrücke können insbesondere bei Fahrzeugen eingesetzt werden, bei denen die Lastanteile der Einzelachsen besonders variabel sind, beispielsweise bei Sattelzügen.

Die Lastanteile der Achsen lassen sich beispielsweise durch Druckmessung der den Achsen zugeordneten Luftfederbälge bei luftgefederten Fahrzeugen erfassen. Weiter können die Lastanteile auch über die jeweils unterschiedlichen Bremsdrücke an verschiedenen Achsen bei solchen Fahrzeugen, die solche unterschiedlichen Bremsdrücke erzeugen können, erfaßt werden. Dies ist z.B. der Fall bei Fahrzeugen, welche eine schlupfgeregelte Bremsung erzeugen, d. h. die Bremsdrücke im Normalbetrieb so ausregeln, daß alle Räder etwa den gleichen Schlupf haben.

In der (einzigen) Figur ist ein schematisiertes Flußdiagramm zur Durchführung einer vorteilhaften Variante des erfindungsgemäßen Verfahrens dargestellt.

In einem Start-Schritt werden zunächst bestimmte, im Programm benötigte Werte initialisiert. So wird die temporäre Istverzögerung, also die aktuelle Fahrzeugverzögerung, auf Null gesetzt, die Verzögerungsschwelle auf etwa 1,8 m/s$^2$ gesetzt und die Grenzgeschwindigkeit auf etwa 20 km/h gesetzt.

Im nächsten Schritt werden bestimmte Werte in das Programm eingelesen, und zwar eine vom Fahrer initiierte Rollsperren-Anforderung, beispielsweise die Stellung eines vom Fahrer zu betätigenden Schalters zur Aktivierung der Rollsperrenfunktion, weiter die Fahrzeugistverzögerung, weiter je eine Information über die Betriebsbremsanlage (BBA), die Dauerbremsanlage und die Feststellbremsanlage (FBA), und schließlich die Radgeschwindigkeiten des Fahrzeugs. Die genannten Informationen über den Zustand der Bremsanlagen können durch entprechende elektrische Schalter abgegeben werden.

Im nächsten Schritt wird überprüft, ob die Rollsperren-Anforderung gesetzt ist, d. h. 1 beträgt (Schalter eingelegt). Sollte dies nicht der Fall sein, wird zum Einleseschritt zurückgeleitet. Sollte dies jedoch der Fall sein, wird abgefragt, ob die Betriebsbremsanlage betätigt ist bzw. gleich 1 ist. Sollte dies nicht der Fall sein, wird abgefragt, ob die Dauerbremse betätigt ist, d. h. gleich 1 ist. Sollte dies ebenfalls nicht der Fall sein, wird zum Einleseschritt zurückgeleitet.

Falls die Betriebsbremsanlage oder die Dauerbremse betätigt sind, wird im nächsten Schritt abgefragt, ob die Feststellbremsanlage betätigt ist. Sollte diese betätigt sein (FBA=1), wird zum Einleseschritt zurückgeleitet. Sollte die Abfrage der Feststellbremsanlage jedoch Null ergeben, d. h. diese nicht betätigt sein, wird im nächsten Schritt abgefragt, ob die Fahrzeuggeschwindigkeit größer als die Fahrzeuggrenzgeschwindigkeit ist.

Sollte dies der Fall sein, wird die temporäre Fahrzeugverzögerung auf den aktuellen Meßwert der Fahrzeugverzögerung gesetzt und zum Einleseschritt zurückgeleitet. Sollte die Fahrzeuggeschwindigkeit jedoch kleiner oder gleich der Grenzgeschwindigkeit sein, wird im nächsten Schritt abgefragt, ob die aktuelle Fahrzeugverzögerung unterhalb der Verzögerungsschwelle liegt.

Sollte dies nicht der Fall sein, wird im nächsten Schritt die interne Berechnung des Solldruckes der Rollsperre durchgeführt. Sollte jedoch die tatsächliche Fahrzeugverzögerung kleiner als die Verzögerungsschwelle sein, wird im nächsten Schritt die tatsächliche Fahrzeugverzögerung auf die Verzögerungsschwelle gesetzt. Anschließend wird ebenfalls der RollsperrenSolldruck berechnet, und zwar hier nach der oben erwähnten Formel

$$\texttt{Solldruck\_RSP = k1 x Ist\_Verz\_Temp x pmax x k2.}$$

Im nächsten Schritt wird geprüft, ob das Fahrzeug stillsteht. Sollte ein Stillstand noch nicht erkannt sein, wird zum Einleseschritt zurückgeleitet. Sollte jedoch der Stillstand des Fahrzeugs erkannt sein, wird die Rollsperre des Fahrzeugs durch Einleitung des berechneten Rollsperren-Solldrucks in die Radbremsen aktiviert.

Damit ist das Flußdiagramm zur Berechnung des Rollsperren-Solldruckes und zur Aktivierung der Rollsperre abgearbeitet.

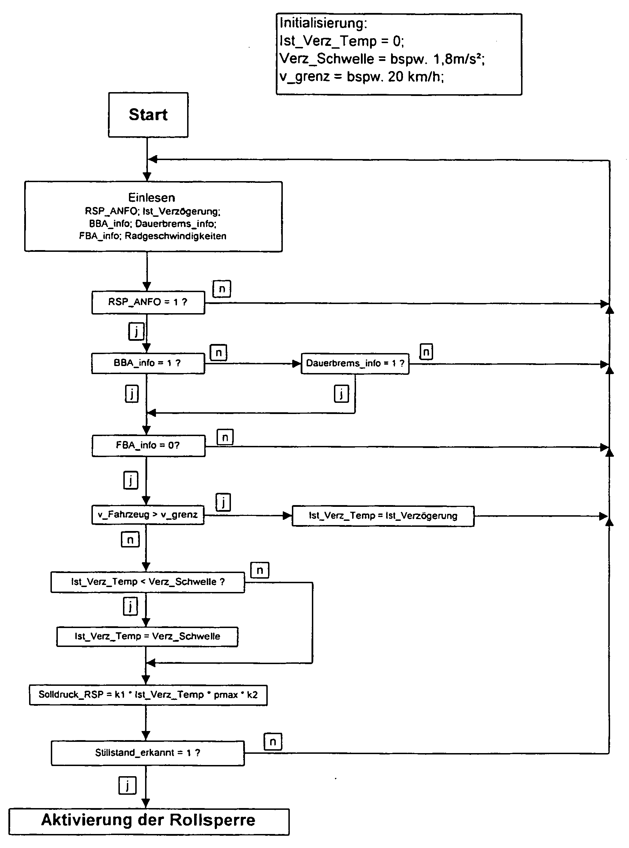

**Patentansprüche**

1. Verfahren zur Sollwert-Generierung für eine Rollsperre (RSP) in einem Fahrzeug, insbesondere Nutzfahrzeug, mit fremdkraftgespeister Bremsanlage und mit elektronischer Bremssteuerung (EBS), wobei das Fahrzeug durch seine Betriebs-Bremsanlage im Stillstand auch ohne Fahrer-Betätigung des Bremspedals durch automatisches Einsteuern eines Rollsperrendruckes in die Radbremsen auf einer ebenen oder geneigten Fahrbahn gehalten werden kann, **dadurch gekennzeichnet,**
   **daß** der Rollsperrendruck eine Funktion der temporären Fahrzeugverzögerung vor einem Halt des Fahrzeugs ist.

2. Verfahren nach Anspruch 1, **dadurch gekennzeichnet, daß** als temporäre Fahrzeugverzögerung ein Wert berechnet wird, der proportional der maximalen Fahrzeugverzögerung vor dem Halt des Fahrzeugs ist.

3. Verfahren nach Anspruch 1, **dadurch gekennzeichnet, daß** als temporäre Fahrzeugverzögerung ein Wert berechnet wird, der proportional der mittleren Fahrzeugverzögerung vor dem Halt des Fahrzeugs ist.

4. Verfahren nach einem oder mehreren der Ansprüche 1 bis 3, **dadurch gekennzeichnet, daß** die temporäre Fahrzeugverzögerung nur oberhalb einer festgelegten Fahrzeuggeschwindigkeits-Schwelle ausgewertet wird.

5. Verfahren nach Anspruch 4, **dadurch gekennzeichnet, daß** die Fahrzeuggeschwindigkeits-Schwelle etwa 20 km/h beträgt.

6. Verfahren nach einem oder mehreren der Ansprüche 1 bis 5, **dadurch gekennzeichnet, daß** der Wert der temporären Fahrzeugverzögerung in einen temporären Speicher eingelesen wird.

7. Verfahren nach einem oder mehreren der Ansprüche 1 bis 6, **dadurch gekennzeichnet, daß** für den Fall, daß die temporäre Fahrzeugverzögerung unterhalb eines Schwellwertes bleibt, dieser Schwellwert als temporäre Fahrzeugverzögerung geladen wird.

8. Verfahren nach Anspruch 7, **dadurch gekennzeichnet, daß** der Schwellwert für die temporäre Fahrzeugverzögerung etwa 1,8 m/s$^2$ beträgt.

9. Verfahren nach einem oder mehreren der Ansprüche 1 bis 8, **dadurch gekennzeichnet, daß** der Rollsperrendruck berechnet wird nach der Formel

$$\texttt{Solldruck\_RSP = k1 x Ist\_Verz\_Temp x pmax}$$

mit:

Solldruck_RSP = Rollsperrendruck,
k1 = Faktor zur Umrechnung der Verzögerung in einen prozentualen Anteil,
Ist_Verz_Temp = gespeicherter Istwert der temporären Fahrzeugverzögerung,
pmax = maximal erreichbarer Bremsdruck des Fahrzeugs

10. Verfahren nach einem oder mehreren der Ansprüche 1 bis 9, **dadurch gekennzeichnet, daß** der Rollsperrendruck berechnet wird nach der Formel

$$\texttt{Solldruck\_RSP = k1 x Ist\_Verz\_Temp x pmax x k2}$$

mit

k2 = Faktor zur Berücksichtigung des aktuellen Beladungszustands aus einer externen Masseberechnung.

**11.** Verfahren nach einem oder mehreren der Ansprüche 1 bis 10, **dadurch gekennzeichnet, daß** für die Einzelachsen des Fahrzeugs unterschiedliche Haltedrücke berechnet und ausgesteuert werden, in Abhängigkeit von den Lastanteilen der Einzelachsen.

**12.** Verfahren nach Anspruch 11, **dadurch gekennzeichnet, daß** Achsen mit höheren Lastanteilen mit höheren Haltedrücken versorgt werden.

**Claims**

**1.** Method of generating a desired value for hill-hold control (HHC) in a vehicle, especially a commercial vehicle, having a power-assisted braking system and having an electronic braking system (EBS), it being possible for the vehicle to be held stationary by its service brake system on a flat or sloping roadway, even without operation of the brake pedal by the driver, by automatic introduction of a hill-hold control pressure into the wheel brakes,
**characterized in that**
the hill-hold control pressure is a function of the temporary vehicle deceleration before the vehicle comes to a halt.

**2.** Method according to claim 1, **characterized in that** as the temporary vehicle deceleration a value is calculated that is proportional to the maximum vehicle deceleration before the vehicle comes to a halt.

**3.** Method according to claim 1, **characterized in that** as the temporary vehicle deceleration a value is calculated that is proportional to the average vehicle deceleration before the vehicle comes to a halt.

**4.** Method according to one or more of claims 1 to 3, **characterized in that** the temporary vehicle deceleration is evaluated only above a specified vehicle speed threshold.

**5.** Method according to claim 4, **characterized in that** the vehicle speed threshold is approximately 20 km/h.

**6.** Method according to one or more of claims 1 to 5, **characterized in that** the value of the temporary vehicle deceleration is entered into a temporary memory.

**7.** Method according to one or more of claims 1 to 6, **characterized in that** for the case where the temporary vehicle deceleration remains below a threshold value, that threshold value is loaded as temporary vehicle deceleration.

**8.** Method according to claim 7, **characterized in that** the threshold value for the temporary vehicle deceleration is approximately 1.8 m/s$^2$.

**9.** Method according to one or more of claims 1 to 8, **characterized in that** the hill-hold control pressure is calculated in accordance with the formula

$$\text{desired pressure\_HHC} = k1 \times \text{actual\_decel\_temp} \times \text{pmax}$$

where:

desired pressure_HHC = hill-hold control pressure,
k1 = factor for converting the deceleration into a percentage,
actual_decel_temp = stored actual value of the temporary vehicle deceleration,
pmax = maximum achievable braking pressure of the vehicle.

**10.** Method according to one or more of claims 1 to 9, **characterized in that** the hill-hold control pressure is calculated in accordance with the formula

$$\text{desired pressure\_HHC} = k1 \times \text{actual\_decel\_temp} \times \text{pmax} \times k2$$

where:

k2 = factor for taking into account the current loading state from an external mass calculation.

**11.** Method according to one or more of claims 1 to 10, **<u>characterized in that</u>** different holding pressures are calculated and regulated for the individual axles of the vehicle, in dependence upon the proportionate loading of the individual axles.

**12.** Method according to claim 11, **<u>characterized in that</u>** axles having higher proportionate loading are supplied with higher holding pressures.

**Revendications**

**1.** Procédé pour générer une valeur de consigne pour un dispositif empêchant le roulement (RSP) dans un véhicule, notamment un véhicule utilitaire, comportant une installation de freinage alimentée par une force extérieure et une unité électronique de commande de freinage (EBS), selon lequel le véhicule peut être retenu à l'arrêt sur une chaussée plane ou inclinée, au moyen de son installation de freinage de service, et ce également sans actionnement de la pédale de frein par le conducteur, grâce à une commande automatique d'une pression du dispositif empêchant le roulement dans les freins de roues,
**caractérisé en ce**
**que** la pression du dispositif empêchant le roulement est fonction de la décélération temporaire du véhicule avant un arrêt de ce dernier.

**2.** Procédé selon la revendication 1, **caractérisé en ce qu'**on calcule, comme décélération temporaire du véhicule, une valeur qui est proportionnelle à la décélération maximale du véhicule avant l'arrêt de ce dernier.

**3.** Procédé selon la revendication 1, **caractérisé en ce qu'**on calcule comme décélération temporaire du véhicule une valeur qui est proportionnelle à la décélération moyenne du véhicule avant l'arrêt de ce dernier.

**4.** Procédé selon une ou plusieurs des revendications 1 à 3, **caractérisé en ce que** la décélération temporaire du véhicule est évaluée uniquement au-dessus d'un seuil fixé de la vitesse du véhicule.

**5.** Procédé selon la revendication 4, **caractérisé en ce que** le seuil de la vitesse du véhicule est égal à environ 20 km/h.

**6.** Procédé selon une ou plusieurs des revendications 1 à 5, **caractérisé en ce que** la valeur de la décélération temporaire du véhicule est lue dans une mémoire temporaire.

**7.** Procédé selon une ou plusieurs des revendications 1 à 6, **caractérisé en ce que** dans le cas où la décélération temporaire du véhicule reste inférieure à une valeur de seuil, cette valeur de seuil est chargée en tant que décélération temporaire du véhicule.

**8.** Procédé selon la revendication 7, **caractérisé en ce que** la valeur de seuil pour la décélération temporaire du véhicule est égale à environ 1,8 m/s$^2$.

**9.** Procédé selon une ou plusieurs des revendications 1 à 8, **caractérisé en ce que** la pression du dispositif empêchant le roulement est calculée conformément à la formule

$$\text{Solldruck\_RSP} = k1 \times \text{Ist\_Verz\_Temp} \times \text{pmax'}$$

avec:

Solldruck_RSP = Pression dans le dispositif empêchant le roulement
k1 = Facteur de conversion de la décélération en une composante en pourcentage
Ist_Verz_Temp = Valeur réelle mémorisée de la décélération temporaire du véhicule,
pmax = Pression maximale de freinage pouvant être obtenue du véhicule

**10.** Procédé selon une ou plusieurs des revendications 1 à 9, **caractérisé en ce que** la pression du dispositif empêchant le roulement est calculée conformément à la formule

$$Solldruck\_RSP = k1 \times Ist\_Verz\_Temp \times pmax \times k2$$

avec

k2 = Facteur pour tenir compte de l'état réel de charge à partir d'un calcul externe de masse

**11.** Procédé selon une ou plusieurs des revendications 1 à 10, **caractérisé en ce que** différentes pression d'arrêt sont calculées et commandées pour les différents essieux du véhicule, en fonction des composantes de charge des essieux individuels.

**12.** Procédé selon la revendication 11, **caractérisé en ce que** les essieux sont alimentés par des composantes de charge plus élevées pour des pressions d'arrêt plus élevées.

EP 1 449 734 B1

Initialisierung:
Ist_Verz_Temp = 0;
Verz_Schwelle = bspw. 1,8m/s²;
v_grenz = bspw. 20 km/h;

**Start**

Einlesen
RSP_ANFO; Ist_Verzögerung;
BBA_info; Dauerbrems_info;
FBA_info; Radgeschwindigkeiten

RSP_ANFO = 1 ? — n
j

BBA_info = 1 ? — n → Dauerbrems_info = 1 ? — n
j                    j

FBA_info = 0? — n
j

v_Fahrzeug > v_grenz — j → Ist_Verz_Temp = Ist_Verzögerung
n

Ist_Verz_Temp < Verz_Schwelle ? — n
j

Ist_Verz_Temp = Verz_Schwelle

Solldruck_RSP = k1 * Ist_Verz_Temp * pmax * k2

Stillstand_erkannt = 1 ? — n
j

**Aktivierung der Rollsperre**

9